# EUROPEAN PATENT APPLICATION

(11) **EP 4 738 304 A1**
(43) Date of publication of application: **06.05.2026**
(21) Application number: 25212617.2
(22) Date of filing: 31.10.2025
(51) Int. Cl.: G08B 29/14

(54) **AN INSPECTION DEVICE FOR INSPECTING A WORKING OF AN AMBIENT AIR COMPOSITION DETECTOR**

(30) Priority: 31.10.2024 LU 508760
(71) Applicant: Vincotte International S.A., 1800 Vilvoorde (BE)
(72) Inventor: BASTIN, Maxime, 4020 Wandre (BE)
(74) Representative: Kirkpatrick

(57) **Abstract**

Inspection device for inspecting an ambient air composition detector, comprising an assembly of a control member and a receptacle, said receptacle being provided for receiving a fluid container equipped with an opening valve mechanism, said inspection device being dimensioned for being applied on a drone, said control member comprises a trigger member provided for opening and closing of the valve mechanism, said trigger member being lodged in a housing having a clamping member for clamping said fluid container, said control member further comprising a receiver, a control unit and a power source, said control unit being provided for performing said opening and closing of the valve mechanism under control of received valve mechanism opening and closure control instructions, said receptacle being cup shaped and further provided for carrying the receiver, the control unit and the power source, and wherein the cumulated weight of the assembly is less than 120g.

## Description

### Field of the invention

The invention relates to an inspection device for inspecting a working of an ambient air composition detector, in particular a fire and/or smoke detector inspection device, comprising an assembly of a control member and a receptacle, said receptacle being provided for receiving a fluid container equipped with a valve mechanism, said control member being provided for controlling an opening and closure of said valve mechanism, said inspection device being dimensioned for being applied on a drone.

### State of the art

Smoke detectors play a crucial role in fire safety, serving as a first line of defence in early fire detection. Widely adopted in residential, commercial, and industrial settings, these smoke detectors are essential for safeguarding lives and property by providing timely alerts in the event of a fire. However, to ensure their reliability, regular inspection, testing, and maintenance are required. Typically, this involves manual labour, which can be time-consuming, labour-intensive, and often risky, especially in large or hard-to-reach areas such as high ceilings, industrial facilities, or remote locations.

Advancements in drone technology offer a promising solution to these challenges. Unmanned aerial vehicles (UAVs), commonly known as drones, provide an innovative approach to contribute to automating the smoke detector inspection process. Equipped with specific sensors, actuators and/or cameras, drones can efficiently access difficult-to-reach smoke detectors via traditional methods, such as high ceilings, over machinery, or in areas with restricted physical access, support real-time functional testing, and capture data on their operational status. The drone-based aerosol inspection devices eliminates the need for aerial platforms, scaffolding, or other access equipment, which would traditionally require halting or restricting operations in industrial or commercial environments. The use of drones allows for smoke detector testing to be performed with minimal or no disruption to ongoing operations.

The use of drones mitigates the risks associated with manual access to elevated smoke detectors, such as those mounted on high ceilings or in confined spaces. By utilizing a drone to carry and deploy the fluid, operators remain on the ground, thus eliminating the need for ladders or aerial work platforms and reducing the risk of falls or other accidents. The speed and mobility of drones allow for quicker access to detectors, resulting in a more time-efficient process. Additionally, cost savings are realized by eliminating the need for expensive access equipment and reducing labour time and costs.

The patent documents LU100705, KR1020160024651, and KR1020210102034 disclose drones specifically designed for the inspection of installations, including smoke detectors. These drones, equipped with inspection devices, are manoeuvred just below the installations to be inspected and generate smoke to test the functionality of the smoke detectors. The smoke generation according to these patent documents is achieved either through a heat source or by altering the properties of the air to create smoke-like particles. However, none of these patent documents suggest the use of an aerosol to emit smoke, which presents several advantages. An aerosol-based system can provide a more consistent and controlled release of smoke, ensuring better accuracy in functional testing. Additionally, aerosol solutions are more portable, easier to refill or replace, and do not require complex mechanisms like heating elements or air modification systems, making the drones more efficient and safer to operate.

The patent application US14/193788 and the device available at https://www.scannfly.be/rookmelder-drone/ propose using an aerosol can for spraying smoke into the detector in order to test the smoke detectors. To accommodate the aerosol can, these solutions rely on custom-built drones specifically designed for this purpose. However, these aerosol systems are heavy and bulky, making them incompatible with the lightweight drones available on the market. In order to carry those aerosol systems "home-made" drones were developed, which can present safety risks. Unlike commercially certified drones, these custom-built models lack the stringent safety standards necessary for reliable operation. Additionally, the large payload required for these systems makes the drones heavier and more cumbersome, increasing the risk of accidents in the event of a malfunction or crash. This poses a direct danger to the operator and nearby individuals.

The applicant therefore considered it useful to develop an inspection device for inspecting a working of an ambient air composition detector that is sufficiently flexible and light to be mounted on standard commercial drones meeting strict safety criteria.

### Solution of the invention

To this purpose the inspection device for inspecting a working of an ambient air composition detector is characterized in that said control member comprises a trigger member provided for mechanically performing said opening and closing of the valve mechanism, said trigger member being lodged in a housing having a clamping member dimensioned for clamping the housing against said fluid container, said receptacle and said housing being two separate entities, said control member further comprising a receiver, a control unit and a power source for powering the receiver, the control unit and the trigger member, said receiver being connected to the control unit which on its turn is connected to the trigger member, said receiver being provided for receiving valve mechanism opening and closure control instructions, said control unit being provided for performing said opening and closing of the valve mechanism under control of the received valve mechanism opening and closure control instructions, said receptacle being cup shaped and further provided for carrying the receiver, the control unit and the power source, and wherein the cumulated weight of the assembly is less than 120g, preferably less than 100g, preferably less than 75g, preferably less than 50g, more preferably less than 40g.

The advantage of the inspection device according to the present invention is that the inspection device is light enough to be carried by a commercially available standard drone that meets strict safety requirements. Indeed, the technical specifications of such drones define maximum payload limits that the drone can carry while ensuring reliable operational safety conditions. Therefore, it is essential to provide an assembly that is sufficiently lightweight so that the combined weight of the assembly and the fluid container remains within the payload limits set by the manufacturer. The cup shape of the receptacle and the fact that the trigger member is lodged separately from the receiver and the power supply contribute to reduce the weight of the assembly. The entire device has been purpose-built around this weight constraint. A further advantage is interchangeability, as the inspection device by means of its clamping member enables the fluid container to be changed rapidly when it is empty, and a new one needs to be installed.

To achieve sufficient weight reduction, the invention introduces a separation between the receptacle and the housing, which are separate entities. The use of a clamping member enables to secure the housing directly onto the fluid container, at a height of the valve mechanism. Unlike prior art, where the receptacle extends from the bottom of the fluid container up to the valve mechanism and also serves as the housing, the arrangement according to the invention allows the receptacle to be dimensioned with a reduced height, sufficient only to stably receive and retain the fluid container. By clamping the housing directly to the container, there is no longer a need for an elongated receptacle structure, which leads to unnecessary material and weight. This results in considerable material savings and a significant reduction in the cumulative weight of the assembly, thereby improving compatibility with drones, subject to strict payload limitations.

### Fluid container

The receptacle is designed to receive a fluid container. The fluid container is filled with a test gas suitable for checking the correct working of an ambient air composition detector, in particular a fire and/or smoke detector. Generally speaking, and as understood by the invention, a fluid container has a cylindrical body and comprises at the top a valve mechanism, on which a pressure must be exerted to open it and liberate the fluid. When the pressure is released, the valve mechanism returns to its original position and closes the fluid container, preventing the fluid from escaping from the container.

### Trigger member

As part of the inspection of the working of an ambient air composition detector, it is indeed necessary to be able to emit a fluid, preferably smoke, in order to control if the detector reacts upon receiving the supplied fluid. The trigger member is the part of the assembly that mechanically triggers the opening and closing of the fluid container valve mechanism. Ideally, the trigger member is an electrically powered system capable of applying a pressure on the valve mechanism in order to release the fluid. The trigger member preferably exerts a rotary movement on the valve mechanism for opening and closing it. The trigger member is preferably a servomotor coupled to an output shaft having an end to which a cam is mounted. The force exerted by the servomotor and the cam is capable of maintaining opposition to a static return force exerted by the valve mechanism. The servomotor offers the advantage of being particularly light and therefore limiting the weight of the assembly. Alternatively, a magnetically powered member can be used.

### Housing and clamping member

The trigger member should be judiciously positioned so as to effectively act on the valve mechanism to emit fluid. The type and geometry of the fluid container has to be taken into consideration when applying the housing of the trigger member on the fluid container, in particular on the valve mechanism. To do this, the trigger member is lodged in the housing adapted to position the trigger member judiciously. The trigger member can be lodged in the housing and retained therein by screws, nails, glue and/or clamped therein. Advantageously, the trigger member is fixed with two lightweight screws, each preferably shorter than 1cm long, which is sufficient to prevent it from moving and which reduces the total weight of the assembly.

The housing material can also be determined to save weight. Ideally, the housing is made from rigid plastic, which is lighter than metal and sufficiently strong. Preferably, the housing is made from thermoplastic polyurethane (TPU) filaments, more preferably by filaments having a diameter of 1.75mm. To save even more weight, the housing can comprise perforations. As an alternative to thermoplastic polyurethane (TPU), the housing can be made from other lightweight materials that are sufficiently strong. A non-exhaustive list is provided below:
- Thermoplastics: TPU, PC, PP, PLA, PETG, nylon,
- High-performance polymers: PEEK, Ultem,
- Fiber composites: carbon-fiber or glass-filled plastics,
- SLA/DLP 3D-printable resins (impact-resistant or flexible),
- Bio-based and biodegradable options (e.g., PLA, PHA) for disposable missions.

To further reduce weight, the housing may consists of a foam-filled or lattice structure.

A significant advantage of providing a clamping member for securing the housing directly against the fluid container, in proximity to the valve mechanism, is the substantial reduction in material usage and overall device weight. By clamping the housing as a separate entity onto the fluid container itself, there is no need for a bulky or elongated housing structure extending from the drone shell down to the level of the valve mechanism, and even higher. This design eliminates the requirement for additional support components or extended mounts, which would otherwise add unnecessary mass to the assembly. The direct clamping approach not only simplifies the mechanical integration but also contributes to reducing the cumulative weight of the inspection device, thereby ensuring compatibility with commercially available drones that have strict payload limitations.

In order to ensure that the housing remains in a fixed position with respect to the fluid container, the housing preferably surrounds at least partially the valve mechanism of the fluid container. To further limit his weight, the housing only partially surrounds the valve mechanism, e.g. at half of a diameter of the valve mechanism or less. The housing further comprises the clamping member designed to clamp the housing against the fluid container. Advantageously, the housing of the trigger member comprises at least one passage extending through it for receiving the clamping member, preferably formed by a tie-wrap,. Alternatively, the clamping member can be a resilient member. As the trigger member, lodged in the housing, is arranged to apply a pressure to the fluid container valve mechanism, a reaction force will be applied on the trigger member and thus transmitted to the housing. The clamping member is designed to resist against this reaction force.

According to certain embodiments, the housing only partially surrounds the valve mechanism at half of a diameter of the valve mechanism or less, and comprises one passage extending through it for receiving the clamping member, preferably a tie wrap, for clamping the housing against the fluid container. This partial wrap configuration provides adequate grip through friction and shape-fit but requires less material and reduces load on the drone's frame.

### Receiver, control unit and power source

Given that the assembly is provided to be carried on a drone, it is essential to be able to remotely control the opening and closing of the container valve mechanism. Precise and rapid control of the valve mechanism enables an efficient dosage of the fluid and consequently more detectors can be inspected without having to change the fluid container, also meaning time savings. To be able to drive the trigger member remotely, the assembly therefore comprises a receiver, a control unit and a power source. The power source supplies power to the receiver, the control unit and the trigger member. Preferably, the power source is a battery, more preferably provided to be recharged between operations. Alternatively, the power source can be formed by one or more small solar cells.

The receiver is connected to the control unit, which in turn is connected to the trigger member. These connections are preferably wired. The receiver is provided to receive valve mechanism opening control instructions. These instructions come, for example, from an operator using a remote-control emitter to operate the drone and the inspection device. The control unit, connected to the receiver, is provided to process these valve mechanisms opening control instructions and to control the triggering member according to these instructions. The control instruction are preferably in the form of an on/off instructions. The trigger member is preferably programmed to generate a precise and sustained PWM (Pulse Width Modulation) signal upon receipt of the control instruction. Such a PWM signal will enable a trigger member pall rotation which is just enough to trigger the valve mechanism just long enough to release an appropriate amount of smoke without wasting it.

The trigger member is preferably controlled via a pulse-width modulated (PWM) signal, enabling highly accurate dosing (e.g., short 300 ms bursts). This level of control allows the use of smaller fluid container for a given number of ambient air composition detectors to be inspected, reducing the need for excess propellant, i.e. the weight, and extending mission life without payload penalties.

According to certain embodiments, when the inspection device is configured for use with a drone comprising a built-in LED light actuable by an operator or flight controller, the receiver may comprise a light sensor configured to detect a light pulse emitted by the LED. The detected light pulse serves as a control instruction for opening the valve mechanism. Upon detection of the light pulse by the receiver, the control unit is configured to actuate the trigger member to perform opening of the valve mechanism.

### Receptacle

The assembly must also be able to receive and retain the fluid container. To do this, the assembly comprises the receptacle provided for receiving the fluid container. This receptacle is cup-shaped, having a bottom surface and preferably a cylindrical side wall to ensures minimal material use while offering stability during flight. The side wall is dimensioned to conform to the contour of the fluid container intended to be received therein. Preferably, the outside diameter of the container intended to be carried and the inside diameter of the receptacle match with each other so that the side wall applies a pressure to the container when it is inserted therein. To limit the weight, the height of the side wall is kept to a minimum while still ensuring a good fit of the fluid container. The height of the wall is preferably comprised between 1 and 4 cm, more preferably between 1.5 and 3.5 cm, even more preferably between 2 and 3 cm. To limit even more the weight, the wall is thin. However, care must be taken to ensure that the receptacle is sufficiently rigid to hold the container intended to be inserted therein. Preferably, the thickness of the wall or walls is comprised between 0.5 and 3mm, more preferably between 1 and 2mm, even more preferably between 1.25 and 1.75mm to provide sufficient rigidity under flight stress while remaining lightweight. In certain embodiments, non-structural areas of the wall or walls are perforated to further reduce mass without compromising strength or safety.

The material of the receptacle can also be carefully chosen to limit the weight of the assembly and provide a good balance between rigidity, flexibility and weight. Ideally, the receptacle is made from rigid plastic , which is lighter than metal and sufficiently strong. Preferably, the receptacle is made from thermoplastic polyurethane (TPU) filaments, more preferably filaments having a diameter of 1.75mm. . As an alternative to thermoplastic polyurethane (TPU), the receptacle can be made from other lightweight materials that are sufficiently strong. A non-exhaustive list is provided below:
- Thermoplastics: TPU, PC, PP, PLA, PETG, nylon,
- High-performance polymers: PEEK, Ultem,
- Fiber composites: carbon-fiber or glass-filled plastics,
- SLA/DLP 3D-printable resins (impact-resistant or flexible),
- Bio-based and biodegradable options (e.g., PLA, PHA) for disposable missions.

To further reduce weight, the receptacle may consists of a foam-filled or lattice structure.

The receptacle is also provided for carrying the receiver, the control unit and the power source. Preferably, the receptacle comprises at least one pocket, arranged along the cylindrical wall, and provided to house the receiver, the control unit and the power source. Ideally, the pocket or pockets form(s) a single piece with the receptacle and are made of the same material, e.g. moulded into the receptacle wall. This eliminates the need for separate mounts, enclosures, or structural reinforcements. It also shortens wiring paths, reduces electromagnetic interference risk, and contributes to mechanical robustness at lower weight.

In order to be mounted on the drone, the receptacle can be provided to be glued to the drone by applying glue to the bottom surface. This option saves weight. Alternatively, the receptacle may have at least one further passage provided for inserting at least one clamp to tighten the receptacle to the drone. This option has the advantage of being easy to remove. Advantageously, to save weight and to be easy to remove, the receptacle comprises a self-gripping fastening system, in other words a self-adhesive double-sided scratch system or loop and hook system well known to the skilled person in the art. A hooked surface, for example, is glued to the bottom surface of the receptacle, while a looped surface is provided to be glued to the drone. The two surfaces can obviously be reversed.

### Cumulated weight

In order for the assembly to be able to carry and control member, the receptacle and the fluid container fitted with the valve mechanism on a commercial standard drone meeting strict safety criterion are imposed. The cumulative weight of the assembly is less than 120g, more preferably less than 100g, even more preferably less than 70g and most preferably about 50g. This weight does not include the fluid container, which is not part of the assembly. The total weight of the assembly and the fluid container should not exceed 200g. This limited weight means that the fluid container can be carried on a drone within the maximum payload, guaranteeing greater safety than a heavy, bulky 'home-made' drone.

### Optional light source

Optionally the assembly comprises a light source, in particular a LED and/or a laser for assisting a drone operator to position the device underneath the ambient air composition detector to be inspected. The light source is designed to be supplied with power furnished by the power source. The light source can be carried by the receptacle in a similar way as the receiver, control unit and power source.

### Optional tube

The inspection device as described is intended to be mounted on a drone for carrying a fluid container and to emit fluid below an ambient air composition detector. In order to assess the correct working of the detector, a sufficient concentration of fluid must reach the vicinity of the detector. However, fluid escaping from the container valve mechanism may be disturbed by turbulence generated by the drone's propellers and dissipate into the air without reaching the smoke or fire detector thereby leading to an insufficient amount of fluid for accurately controlling the working of the detector. To ensure that there is sufficient distance between the drone's propellers and the fluid outlet, the inspection device may further comprise a tube arranged to be connected to the valve mechanism of the fluid container. In this way, when the valve mechanism is open, the fluid passes through the tube, without disturbance, and then leaves the tube at a sufficient distance from the propellers without being disturbed by the latter. The length of the tube is preferably greater than 10cm, preferably greater than 12.5cm, preferably greater than 15cm, preferably greater than 17.5cm, preferably greater than 20cm. The material of the tube can be chosen judiciously to limit the weight of the assembly. Preferably the tube is made of plastic, preferably polytetrafluoroethylene. The internal diameter of the tube must be large enough to ensure sufficient fluid flow, preferably greater than 1mm.

### Detailed description of the invention

The invention will be better understood with reference to the drawings where:
Figure 1 shows an example of a usual fluid container;
Figure 2a shows a front view of a first embodiment of the inspection device applied on the fluid container;
Figure 2b shows a side view of the first embodiment of the inspection device applied on the fluid container;
Figure 2c shows a top view of the first embodiment of the inspection device applied on the fluid container;
Figure 3 shows a front view of a drone equipped with the first embodiment of the inspection device applied on the fluid container;
Figure 4 shows a front view of a preferred embodiment of the inspection device according to the invention applied on the fluid container; and
Figure 5 shows the inspection device applied on the fluid container and mounted on a drone and in operation mode.

In the drawings a same reference sign has been allotted to a same or analogous element.

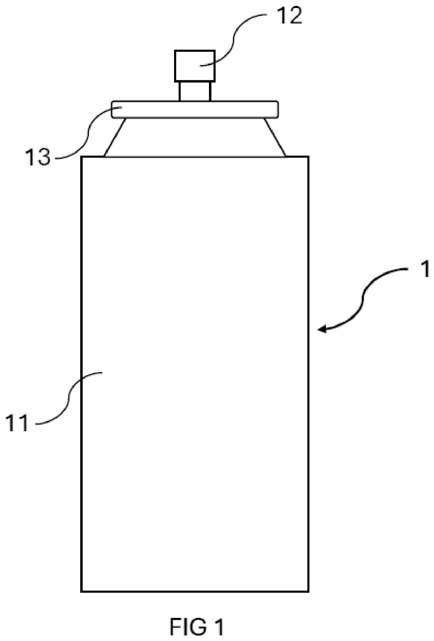

Figure 1 illustrates an example of a known fluid container 1 intended to be used in combination with an inspection device. The fluid container has a cylindrical body 11 and comprises at the top a valve mechanism 12. In order to open the valve mechanism and liberate the fluid a pressure must be exerted on the valve mechanism.

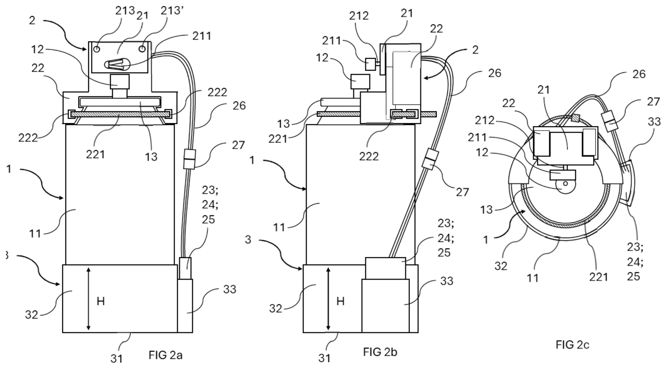

Figures 2a, 2b and 2c are front, side and top views respectively of a first embodiment of an inspection device according to the invention and on which the fluid container 1 is mounted. The inspection device comprises an assembly of a control member 2 and a receptacle 3. The receptacle 3 is provided for receiving the fluid container 1.

This receptacle 3 is cup-shaped, having a bottom surface 31 and a cylindrical side wall 32. The side wall 32 is dimensioned to conform to the contour of a cylindrical base 11 of the fluid container 1 intended to be received therein. The height H of the cylindrical side wall 32 is preferably comprised between 1 and 4 cm, more preferably between 1.5 and 3.5 cm, even more preferably between 2 and 3 cm. The thickness of the wall 32 is comprised between 0.5 and 3mm, more preferably between 1 and 2mm, even more preferably between 1.25 and 1.75mm. Preferably, the receptacle is made from thermoplastic polyurethane (TPU) filaments, more preferably of filaments having a diameter of 1.75mm.

Furthermore, the receptacle 3 comprises at least one pocket 33 arranged along the side wall 32, and provided to house a receiver 23, a control unit 24 and a battery 25 as power source. The pocket 33 forms a single piece with the receptacle 3 and is made of the same material. Alternatively, the receiver 23, control unit 24 and power source could be lodged in separate pockets also arranged along the side wall 32.

The control member 2 comprises a trigger member 21 provided for mechanically performing said opening and closing of the valve mechanism 12. The trigger member 21 comprises a servomotor 21 coupled to an output shaft 212 having an end to which a cam 211 is mounted. The force exerted by the servomotor and the cam is capable of maintaining opposition to a static return force exerted by the valve mechanism 12. The servomotor 21 is lodged in a housing 22 which is further adapted to position the cam 211 of the servomotor 21 judiciously above the valve mechanism 12. The servomotor 21 is preferably fixed to the housing 22 with two leigh weight screws 213;213', each preferably shorter than 1cm long, which is sufficient to prevent it from moving and which limits the total weight of the assembly. Preferably, the housing 22 is made from thermoplastic polyurethane (TPU) filaments, more preferably filaments having a diameter of 1.75mm. To limit even more the weight, the housing 22 can comprise of perforations. The housing 22 comprises a clamping member 221, preferably a tie wrap, designed to clamp the housing 22 to the fluid container 1, in particular to the valve mechanism. The housing 22 partially surrounds the valve mechanism at an angle of 180° or less. The housing 22 comprises at least one passage 222 extending through it for receiving the tie-wrap 221.

The battery 25 and is provided to supply power to the receiver 23, the control unit 24 and the servomotor 21. The receiver 23 is connected to the control unit 24, which in turn is connected to the servomotor 21. The connection between the receiver 23, the control unit 24, the battery 25 and the servomotor 21 is for example made by wires 26. Connectors 27 for the electrical wires 26 are used between the servomotor and the battery 25/control unit 24 to make it easier to disconnect the servomotor while changing the fluid container.

The cumulative weight of the assembly is less than 120g, more preferably less than 100g, even more preferably less than 70g, and most preferably about 50g. The total weight of the assembly and the fluid container should not exceed 200g. This weight does not include the fluid container 1, which is not part of the assembly.

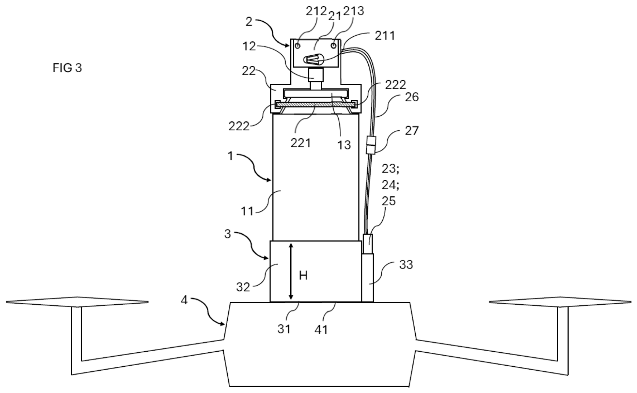

With reference to figure 3, a drone 4 is equipped with the first embodiment of the inspection device according to the invention. The receptacle 3 comprises a self-gripping fastening system, in other words a self-adhesive double-sided scratch system or loop and hook system well known to the skilled person in the art. A hooked surface, for example, is glued to the bottom surface 31 of the receptacle 3, while a looped surface is provided to be glued to the top surface 41 of the drone 4. The two surfaces can obviously be reversed.

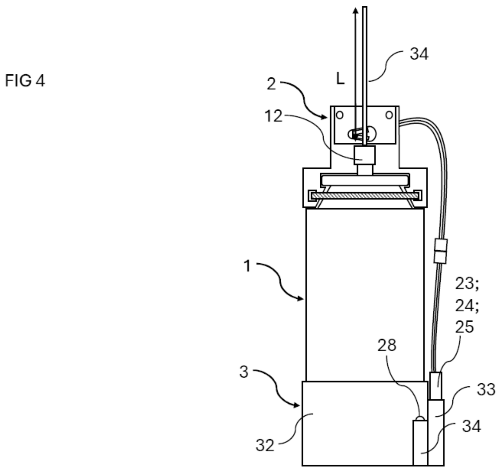

With reference to figure 4, the assembly comprises a light source 28, in particular a LED and/or laser for assisting a drone operator to position the device underneath the ambient air composition detector to be inspected. The light source is designed to be supplied with power furnished by the battery 25. The light source can be carried by the receptacle 3 in a similar way as the receiver 23, control unit 24 and battery 25, in an additional pocket 34.

As shown in figure 4 and in order to ensure that there is sufficient distance between the drone's propellers and the fluid outlet, the inspection device may comprise a tube 34 arranged to be connected to the output of the valve mechanism 12. The length L of the tube is preferably greater than 10cm, preferably greater than 12.5cm, preferably greater than 15cm, preferably greater than 17.5cm, preferably greater than 20cm. Preferably, the tube is made of plastic, preferably polytetrafluoroethylene. The internal diameter of the tube must be large enough to ensure sufficient fluid flow, preferably greater than 1mm.

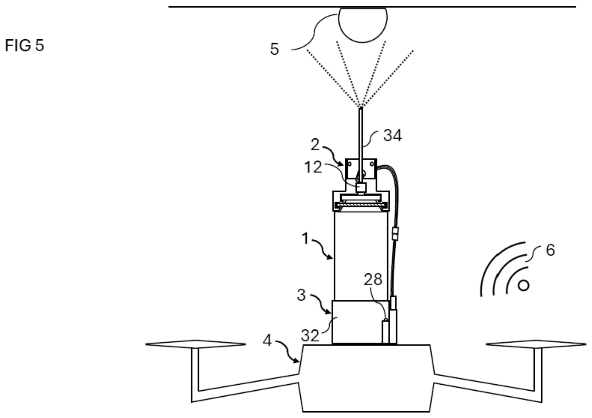

As shown in figure 5, the drone 4 is equipped with the inspection device which carries the fluid container 1. An operator (not shown) pilots the drone 4 and positions it below an air composition detector 5 mounted on a ceiling. In positioning the inspection device, the operator may use the light source 28, if present. When the drone 4 is in position, the operator sends a signal 6 containing instructions to the control member 2 for opening the valve mechanism 12. The receiver 23 receives the instructions and sends them to the control unit 24. The latter will than drive the servomotor 21 in accordance with the received instructions in order to mechanically press the valve mechanism 12. To this purpose the servomotor will drive the shaft into rotation. This rotation will be applied to the cam fixed to the shaft. In such a manner the cam will pivot towards the valve mechanism and apply a pressure thereon for outputting the fluid. The fluid is released and passes through the tube 34 to reach the vicinity of the detector 5. The fluid will enter the detector, and the operator can monitor whether or not the detector will react.

## Claims

1. An inspection device for inspecting a working of an ambient air composition detector, in particular a fire and/or smoke detector inspection device, comprising an assembly of a control member and a receptacle, said receptacle being provided for receiving a fluid container equipped with a valve mechanism, said control member being provided for controlling an opening and closure of said valve mechanism, said inspection device being dimensioned for being applied on a drone, said control member comprises a trigger member provided for mechanically performing said opening and closing of the valve mechanism, **characterized in that** said trigger member being lodged in a housing having a clamping member dimensioned for clamping the housing against said fluid container, said receptacle and said housing being two separate entities, said control member further comprising a receiver, a control unit and a power source for powering the receiver, the control unit and the trigger member, said receiver being connected to the control unit which on its turn is connected to the trigger member, said receiver being provided for receiving valve mechanism opening and closure control instructions, said control unit being provided for performing said opening and closing of the valve mechanism under control of the received valve mechanism opening and closure control instructions, said receptacle being cup shaped and further provided for carrying the receiver, the control unit and the power source, and wherein the cumulated weight of the assembly is less than 120g, more preferably less than 100g.

2. The inspection device according to claim 1, wherein the trigger member comprises a servomotor coupled to an output shaft having an end to which a cam is mounted.

3. The inspection device according to claim 1 or 2, wherein the trigger member is lodged in the housing and retained therein by screws, nails, glue and/or clamped therein.

4. The inspection device according to anyone of the previous claims, wherein the housing is made from rigid plastic, preferably, from thermoplastic polyurethane (TPU) filaments, more preferably filaments having a diameter of 1.75mm.

5. The inspection device according to anyone of the previous claims, wherein the housing partially surrounds the valve mechanism, preferably over half of a diameter or less of the valve mechanism, and comprises one passage extending through it for receiving the clamping member, preferably a tie wrap, for clamping the housing against the fluid container..

6. The inspection device according to anyone of the previous claims, wherein the housing comprises at least one passage extending through it for receiving the clamping member.

7. The inspection device according to anyone of the previous claims, wherein the clamping member is a tie-wrap.

8. The inspection device according to anyone of the previous claims, wherein the receptacle comprises a bottom surface and a cylindrical wall, said cylindrical wall having a height comprised between 1 and 4 cm, more preferably between 1.5 and 3.5 cm, even more preferably between 2 and 3 cm.

9. The inspection device according to claim 8, wherein the thickness of the cylindrical wall is comprised between 0.5 and 3mm, more preferably between 1 and 2mm, even more preferably between 1.25 and 1.75mm.

10. The inspection device according to claim 8 or 9, wherein the receptacle comprises at least one pocket, arranged along the cylindrical wall, and provided to house the receiver, the control unit and the power source.

11. The inspection device according to anyone of the previous claims, wherein the receptacle is made from rigid plastic, preferably from thermoplastic polyurethane (TPU) filaments, more preferably 1.75mm filaments.

12. The inspection device according to anyone of the previous claims, wherein the receptacle is provided to be mounted on the drone by means of a loop and hook system, glue and/or a clamp.

13. The inspection device according to anyone of the previous claims, wherein the assembly comprises a light source, in particular a LED and/or laser for assisting a drone operator to position the device underneath the ambient air composition detector to be inspected.

14. The inspection device according to anyone of the previous claims, wherein the inspection device comprises a tube arranged to be connected to an output of the valve mechanism, wherein the tube has a length greater than 10cm, preferably greater than 12.5cm, preferably greater than 15cm, preferably greater than 17.5cm, preferably greater than 20cm.

15. Method for inspecting a working of an ambient air composition detector, in particular a fire and/or smoke detector inspection device, the method comprising the use of a drone equipped with an inspection device according to anyone of the previous claims.
